# FASCICULE DE BREVET EUROPEEN

(11) **EP 0 462 265 B1**
(45) Date de publication et mention de la délivrance du brevet: **09.08.1995**
(21) Numéro de dépôt: 91902716.9
(22) Date de dépôt: 28.12.1990
(51) Int. Cl.: C08K 5/00

(54) **PROCEDE DE RETICULATION DE (CO)POLYMERES CHLORES, COMPOSITIONS RETICULABLES ET OBJETS CONFORMES**
VERFAHREN ZUM VERNETZEN VON CHLORIERTEN (CO)POLYMEREN, VERNETZBARE ZUSAMMENSETZUNGEN UND DARAUS HERGESTELLTE GEFORMTE GEGENSTÄNDE
METHOD FOR CROSSLINKING CHLORINATED (CO)POLYMERS, CROSSLINKABLE COMPOSITIONS AND SHAPED OBJECTS

(30) Priorité: 28.12.1989 FR 8917357
(43) Date de publication de la demande: 27.12.1991
(73) Titulaire: CENTRE NATIONAL DE LA RECHERCHE SCIENTIFIQUE (CNRS), 75700 Paris Cedex 07 (FR); SOTRA Industries, F-62140 Sainte Austreberthe (FR)
(72) Inventeur: GONDARD, Christian, F-42300 Roanne (FR); MICHEL, Alain, F-69004 Lyon (FR)
(74) Mandataire: Rinuy, Santarelli
(86) Numéro de dépôt international: FR9000967
(87) Numéro de publication internationale: WO9109902

(56) Documents cités:
- FR-A- 2 059 168
- US-A- 3 222 317
- US-A- 3 752 837
- DATABASE WPIL, no. 86-263020, Derwent Publications Ltd., London, GB; & JP-A-53 139 659 (Osaka Soda K.K.) 06-12-1978

## Description

La présente invention concerne un procédé de réticulation de polymères ou (co)polymères (ci-après (co)polymères) chlorés, les compositions réticulables et les objets conformés.

La présente invention a plus particulièrement pour objet un procédé de réticulation de (co)polymères chlorés, seuls ou en mélanges entre eux, qui peut être intégré notamment aux opérations de mise en oeuvre industrielle tels que l'extrusion, le calandrage, l'enduction, l'injection ou le moulage.

La réticulation d'un polymère crée un réseau tridimensionnel, ce qui a pour conséquence d'augmenter la masse moléculaire. Les ponts de réticulation créent des liaisons intermoléculaires qui limitent alors les mouvements des chaînes polymères les unes par rapport aux autres et par voie de conséquence limitent fortement l'écoulement de ces chaînes. La réticulation d'un polymère thermoplastique a donc pour conséquence importante de repousser vers les hautes températures son seuil de thermoplasticité et d'améliorer sa résistance au fluage dans un domaine de température plus large et donc d'obtenir une meilleure stabilité dimensionnelle des objets élaborés.

Plusieurs procédés ont été proposés pour réticuler les thermoplastiques tels que polychlorure de vinyle et polyoléfine. Ils sont soit basés sur des réactions radicalaires, soit sur des réactions de condensation ou de substitution nucléophile. Par exemple en ce qui concerne le polychlorure de vinyle, on a essayé de le réticuler par voie photochimique, par bombardement électronique et par irradiation gamma en soumettant le polymère à ces radiations en présence d'un monomère plurifonctionnel tel que par exemple le diméthacrylate de tétraéthylèneglycol ou le triméthacrylate de triméthylolpropane, la réaction de réticulation étant assurée par le greffage et la polymérisation de ces monomères plurifonctionnels sur le squelette polymère. L'inconvénient majeur de ces procédés pour le polychlorure de vinyle est sa sensibilité à ces rayonnements qui induisent sa dégradation par élimination d'HCl en cascade. En outre, le mécanisme de réticulation est difficilement contrôlable car la polymérisation et le greffage des monomères fonctionnels sur le squelette polymère font intervenir des réactions de transfert.

Par ailleurs, pour obtenir une réticulation homogène et efficace, les quantités de monomère plurifonctionnel doivent être assez élevées, ce qui a pour conséquence de modifier les propriétés intrinsèques du polychlorure de vinyle réticulé. Enfin, les procédés par rayonnement gamma ou par bombardement électronique exigent un niveau technologique élevé et un appareillage onéreux.

Pour pallier ces inconvénients, on a proposé des procédés basés sur le greffage radicalaire de monomères fonctionnalisés initié par des peroxydes. Ces monomères fonctionnalisés peuvent comporter par exemple des groupements alcoxysilanes qui conduisent par hydrolyse et polycondensation à des groupements silanols et à la réticulation. C'est ainsi que le procédé connu sous le nom de procédé SIOPLAST de Dow Chemical a été développé pour la réticulation du polyéthylène, notamment dans les applications câbleries. Ce procédé présente cependant l'inconvénient de provoquer un gradient de densité de réticulation car celle-ci est gouvernée par la diffusion de l'eau dans l'objet fini, eau nécessaire à la réaction d'hydrolyse des fonctions alcoxysilanes.

Pour le polychlorure de vinyle, on a proposé des procédés faisant intervenir une réaction de substitution nucléophile des atomes de chlore par des thiolates alcalins ou alcalinoterreux ou des composés mixtes thiolate-carboxylate alcalins ou alcalinoterreux (K. Mori and Y. Nakamura j. of Polym. Sci, Polym. Chem. Ed 16, 1981 (1978). Ces procédés sont bien adaptés principalement pour les mises en oeuvre par enduction mais ils le sont nettement moins pour les procédés par extrusion ou par calandrage. Mais leur inconvénient majeur réside dans le fait qu'ils sensibilisent fortement les matériaux réticulés à la dégradation photochimique induite par des sous-produits tels que des disulfures. Pour cette raison, le développement de ces procédés ne s'est pas généralisé.

On cherche donc toujours un procédé de réticulation de polymères ou de copolymères chlorés, qui soit simple, peu coûteux et soit mis en oeuvre en l'absence de solvant et par simple chauffage, de manière à être compatible avec les procédés classiques de mise en forme des polymères tels que l'extrusion, l'injection, le calandrage, l'enduction, le moulage et le thermoformage.

C'est pourquoi la présente invention a pour objet un procédé de réticulation de (co)polymères chlorés et de mélanges de (co)polymères chlorés et de (co)polymères comportant des fonctions NH, caractérisé en ce que l'on fait réagir avec ledit (co)polymère, entre 50 et 230°C, et en l'absence de solvant, un dérivé de type amino organométallique de formule (I) :

(R)ₙMe(NR'')ₘ₋ₙR'

dans laquelle :
Me représente un atome d'étain, de plomb, d'antimoine ou de bismuth, de préférence Me représente l'étain,
R représente un radical alcoyle linéaire ou ramifié renfermant de 1 à 8 atomes de carbone, un radical cycloalcoyle renfermant de 3 à 12 atomes de carbone, un radical aryle renfermant de 6 à 14 atomes de carbone éventuellement substitué, un radical aralcoyle renfermant de 7 à 14 atomes de carbone éventuellement substitué ou un radical cycloalcoylalcoyle renfermant de 4 à 8 atomes de carbone,
R' représente un radical alcoyle linéaire ou ramifié comportant de 1 à 20 atomes de carbone, un radical aralcoyle renfermant de 7 à 14 atomes de carbone, un radical cycloalcoyle renfermant de 3 à 12 atomes de carbone, un radical cycloalcoylalcoyle renfermant de 4 à 8 atomes de carbone, un radical arylcycloalcoyle renfermant de 10 à 20 atomes de carbone ou une chaîne polymère, ledit radical R' étant lié par au moins deux fonctions amino au métal et éventuellement fonctionnalisé par une fonction éther, thioéther ou hydroxyle, qui n'est pas susceptible de détruire les réactifs mis en oeuvre.
m est égal à 4 et n est égal à 1, 2 ou 3 lorsque Me représente l'étain ou le plomb,
m est égal à 5 et n est égal à 1, 2, 3 ou 4 lorsque Me représente le bismuth ou l'antimoine,
et R'' représente un atome d'hydrogène ou une des significations de R'.

Le procédé ci-dessus décrit peut être mis en oeuvre tant vis-à-vis d'un (co)polymère chloré que de mélanges de (co)polymères chlorés ou encore de mélanges de (co)polymères chlorés et de polymères comportant des fonctions NH.

Le radical alcoyle linéaire ou ramifié désigne de préférence un radical méthyle, éthyle, n-butyle ou n-octyle.

L'expression "radical cycloalcoyle renfermant de 3 à 6 atomes de carbone" désigne de préférence un radical cyclopropyle, cyclobutyle ou cyclohexyle.

L'expression "radical aryle renfermant de 6 à 14 atomes de carbone" désigne de préférence un radical phényle.

L'expression "radical aralcoyle renfermant de 7 à 14 atomes de carbone" désigne de préférence un radical benzyle ou phénéthyle.

L'expression "radical cycloalcoylalcoyle renfermant de 4 à 8 atomes de carbone" désigne de préférence un radical cyclopropylméthyle.

Le radical alcoyle linéaire ou ramifié comportant de 1 à 20 atomes de carbone renferme de préférence de 2 à 6 atomes de carbone.

Lorsqu'un aryle est substitué, il est de préférence substitué par un radical éthyle, méthyle, méthoxy, chloro ou amino.

Par "dérivé de type amino organométallique", l'on entend que l'atome de métal est lié à un atome de carbone du radical R par une liaison covalente et à l'atome d'azote également par une liaison covalente.

Lorsque n = 1, 2, 3 ou 4, selon la nature du métal, le dérivé organométallique dérive :
d'une polyamine, avantageusement d'une diamine, et il est alors de type cyclique, au moins deux atomes d'azote liés à l'atome de métal étant reliés par un reste hydrocarboné. 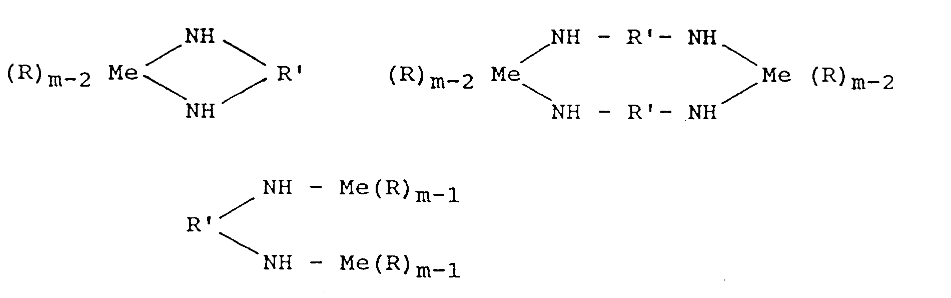
R et R' ayant les significations indiquées.

Les (co)polymères chlorés peuvent être par exemple le polychlorure de vinyle, les (co)polymères du polychlorure de vinyle et de l'acétate de vinyle ou les esters acryliques et méthacryliques, le polychlorure de vinylidène, le polychloroprène, les caoutchoucs chlorés et les polyéthylènes chlorés.

Les (co)polymères comportant des fonctions NH peuvent être par exemple les polyamides tels que le polyamide 12, des polyuréthannes ou des polyurées ou leurs copolymères.

Selon la présente invention, le dérivé de type amino organométallique, par exemple dans le cas de l'étain, peut être synthétisé préalablement à son introduction dans le (co)polymère ou mélange de (co)polymères, par exemple par les voies de synthèse classiques telle que la réaction d'un polymère, avantageusement une diamine, avec un alcoxy organo étain tel que le diméthoxydibutylétain ou un oxyde d'étain.

Le dérivé amino organométallique peut également être préparé in situ par interaction notamment d'un acide organométallique et d'un composé comportant au moins deux fonctions NH.

Dans des conditions préférentielles de mise en oeuvre du procédé ci-dessus décrit, le dérivé amino organométallique est dérivé d'un (co)polymère, notamment d'un polyamide.

Dans d'autres conditions préférentielles de mise en oeuvre du procédé ci-dessus décrit :
- le (co)polymère chloré est le polychlorure de vinyle ;
- le (co)polymère chloré est le polyéthylène chloré ;
- le (co)polymère comportant des fonctions NH est un polyamide ;
- le (co)polymère comportant des fonctions NH est un polyuréthanne ou une polyurée.

On peut citer tout particulièrement la co-réticulation du polychlorure de vinyle avec le polyamide 12 et la co-réticulation du polyéthylène chloré avec le polyamide 12.

L'invention a également pour objet les compositions réticulables, caractérisées en ce qu'elles comprennent un (co)polymère chloré, un dérivé polymère comportant au moins deux fonctions NH et un dérivé amino organométallique tel que défini ci-dessus.

Comme déjà indiqué, ce dernier peut être synthétisé préalablement ou préparé in situ.

La présente demande a plus particulièrement pour objet les compositions réticulables, caractérisées en ce qu'elles comprennent un (co)polymère chloré et un dérivé de type amino organométallique tel que défini ci-dessus.

Elle a également pour objet les compositions réticulables, caractérisées en ce qu'elles comprennent un (co)polymère chloré et un (co)polymère comportant au moins deux fonctions NH et un oxyde organométallique.

Lorsqu'on dit qu'une composition comprend un certain produit, on entend que celle-ci renferme au moins un produit de ce type, par exemple au moins un polymère chloré.

Les compositions selon l'invention peuvent de plus contenir les adjuvants habituellement utilisés dans l'industrie des matières plastiques, charges, plastifiants, antioxydants, stabilisants, pigments, lubrifiants, etc. Ces constituants peuvent être ajoutés dès le début du procédé lors de l'étape de mélange des produits réticulables.

Parmi les charges, on peut citer par exemple les carbonates de calcium, le talc ou l'oxyde de titane.

Parmi les plastifiants, on peut citer par exemple les phtalates tels que le phtalate de di(éthyl-2-hexyle.

Comme stabilisants, on peut citer par exemple les savons métalliques notamment de plomb, de calcium, de zinc ou d'organoétain et les thioglycolates d'organoétain.

Parmi les pigments, on peut citer par exemple le noir de carbone, l'oxyde de titane ou le bleu outremer.

Un avantage selon la présente invention est le contrôle et l'adaptation de la densité de réticulation en fonction des propriétés recherchées par une maîtrise de la concentration des espèces réactives de la composition réticulable, notamment de la concentration de l'amino organo étain et de la composition des (co)polymères chlorés dans le cas des mélanges comportant un ou des polymères comportant au moins deux fonctions NH, par exemple des polyamides.

Selon un avantage de la présente invention, la température de réticulation peut être adaptée en fonction du procédé de mise en oeuvre des compositions relevant de cette invention de façon à ce que la réticulation ne soit pas trop avancée dans la phase de mise en forme des procédés classiques tels que l'extrusion, le calandrage, l'injection, l'enduction et le moulage, la réticulation étant terminée après l'étape de mise en forme, par exemple dans un conformateur ou à l'intérieur d'un moule dans le cas de l'injection, en jouant sur les paramètres temps et température.

Selon l'invention, les propriétés de tenue au fluage et de stabilité dimensionnelle des objets polymères façonnés seront nettement améliorées après réticulation.

Selon l'invention, la co-réticulation de mélanges de (co)polymères chlorés avec des polyamides est également un moyen de stabiliser ces mélanges vis-à-vis des phénomènes de démixtion.

Selon l'invention, la co-réticulation du polyamide avec le polyéthylène chloré en tant que phase élastomère est un moyen d'améliorer les propriétés du polyamide vis-à-vis des chocs.

La présente demande vise enfin les objets conformés, caractérisés en ce qu'ils sont préparés à partir des produits obtenus par la mise en oeuvre du procédé ci-dessus décrit, de même que les objets conformés constitués d'une composition telle que définie ci-dessus.

Les exemples qui suivent illustrent l'invention sans toutefois la limiter.

Le réticulation des (co)polymères chlorés ainsi que la co-réticulation de ces (co)polymères chlorés avec les (co)polymères comportant au moins deux fonctions NH selon l'invention, sont caractérisées en phase dynamique à l'aide d'un plastographe Haake équipé d'un mélangeur interne de capacité 60 ml type Rheomix 600. Cet appareil permet de suivre en continu l'évolution du couple résistant exercé par le polymère sur les pales du malaxeur. La réticulation du polymère entraîne une augmentation du couple observé simultanément ou après la gélification ou la fusion du polymère. La variation du couple C entre le couple atteint après gélification ou fusion (Cmin) et le couple maximum (Cmax) atteint en fin d'expérience est un critère de réticulation.

Deux autres critères ont été utilisés pour évaluer la cinétique de réaction en phase dynamique : le temps Ti au bout duquel se produit une augmentation du couple résistant, caractéristique d'une réticulation significative, et la vitesse d'augmentation du couple entre la valeur maximale (Cmax) et minimale (Cmin) assimilée à la vitesse moyenne de réticulation.

Un autre critère caractérisant le degré de réticulation d'un polymère est le pourcentage de fraction insoluble dans un de ses solvants, par exemple le tétrahydrofuranne (THF) pour le polychlorure de vinyle et ses copolymères.

La réticulation selon la présente invention a également été suivie en conditions statiques à l'aide d'une presse à plateaux chauffant après gélification ou fusion dans le malaxeur interne Rheomix 600 équipant le plastographe Haake pour obtenir une bonne homogénéisation des réactifs et des (co)polymères. Cette première phase étant réalisée, le matériau gélifié ou fondu est transféré dans un moule rectangulaire de 3 mm d'épaisseur placé lui-même entre les plateaux d'une presse chauffante.

Après un temps de cuisson à une température donnée, généralement 5 minutes, la plaque moulée est refroidie rapidement. Le degré de réticulation dans ces conditions est évalué comme précédemment par le taux de polymère insoluble dans un de ses solvants et/ou par le taux de gonflement dans ce solvant, défini par la relation: 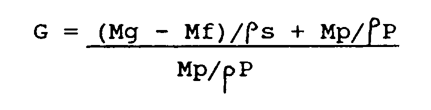
Mg étant la masse de l'échantillon gonflé, Mp la masse du polymère insoluble, ρs et ρp étant les masses volumiques respectivement du solvant et du polymère. Pour le THFρₛ = 0,948 g/ml et pour le polychlorure de vinyle ρp = 1,38g/ml.

Dans tous les exemples suivants, le stabilisant thermique utilisé est le dioctylétain dithioglycolate d'isooctyle, à raison de 2 g pour 100 g de polymère et la vitesse de rotation du malaxeur Rheomix 600 est de 50 tours par minute.

Le tableau I présente les principales caractéristiques de la réticulation du polychlorure de vinyle par l'éthanediamino-1,2-dibutylétain en phase dynamique, la température affichée des parois du malaxeur étant de 200°C. Après 4 minutes et demi de malaxage, le taux de polymère insoluble dans le THF est supérieure à 50 %.

**Tableau I**

| Réticulation du polychlorure de vinyle par l'éthanediamino-1,2-dibutylétain en phase dynamique à 200°C. | | | | | | |
|---|---|---|---|---|---|---|
| Exemple | Ethanediamino-1,2 dibutylétain (mole . kg⁻¹) | Tm (mn) | Ti (mn) | Cmax (Nm) | ΔC (Nm) | Vr (Nm.mn⁻¹) |
| 1 | 0,17 | 4,5 | 3,5 | 46 | 8 | 8 |

Le tableau II présente les caractéristiques de la réticulation du mélange polyamide 12 - polyéthylène chloré à 36 % de chlore en présence d'oxyde de dibutylétain comme composé intermédiaire pour synthétiser le composé réticulant in situ. Pour cet exemple, la température des parois du malaxeur est de 200°C et le polyamide 12 est malaxé durant 10 minutes avec le polyéthylène chloré pour atteindre une valeur palier du couple avant l'introduction de l'oxyde de dibutylétain qui provoque une augmentation de couple durant 2 minutes et demi, avant que celui-ci n'atteigne une nouvelle valeur palier. Le composé réticulant est synthétisé in situ par interaction des groupements amides avec l'oxyde d'étain.

**Tableau II**

| Co-réticulation du polyamide 12 et du polyéthylène chloré par le diamino dibutylétain préparé in situ, dérivé du polyamide. | | | | | | | | |
|---|---|---|---|---|---|---|---|---|
| Exemple | Polyamide 12 (%) | Polyéthylène chloré (%) | Oxyde de dibutylétain (mole.kg⁻¹) | Tm (mn) | Ti (mn) | Cmax (Nm) | ΔC (Nm) | VR (Nm.mn⁻¹) |
| 2 | 91 | 9 | 0,182 | 2,5 | 0 | 12,8 | 8,8 | 3,5 |

Le tableau III rassemble les principales caractéristiques de la co-réticulation du polychlorure de vinyle et du polyamide 12 en phase dynamique à 205°C par le composé diamino dibutylétain synthétisé in situ par interaction des groupements amides et de l'oxyde de dibutylétain.

**Tableau III**

| Co-réticulation du polychlorure de vinyle et du polyamide 12 par le diamino de dibutylétain préparé in situ. | | | | | | | | |
|---|---|---|---|---|---|---|---|---|
| Exemple | Polychlorure de vinyle (%) | Polyamide (%) | Oxyde de dibutylétain (mole.kg⁻¹) | Tm (mn) | Ti (mn) | Cmax (Nm) | ΔC (Nm) | VR (Nm.mn⁻¹) |
| 3 | 70 | 30 | 0,240 | 9 | 5,5 | 17,4 | 1 | 0,25 |

Pour cet exemple, le taux de polymère insoluble dans le THF est supérieur à 50 %_{,} ce qui prouve que le polychlorure de vinyle et le polyamide sont co-réticulés.

Le tableau IV montre les exemples de co-réticulation du polychlorure de vinyle et du polyamide 12 en phase statique à 205°C et sous pression de 10 bars entre les plateaux d'une presse chauffante. La co-réticulation est réalisée en 5 minutes à cette température après un malaxage du mélange des polymères et de l'oxyde de dibutylétain durant 9 minutes dans le malaxeur interne Rheomix 600 à 200°C. Dans ces conditions, pour l'exemple 4, le taux d'insoluble dans le THF après 48 heures d'immersion, atteint 97 % et le taux de gonflement est de 2,5.

**Tableau IV**

| Co-réticulation du mélange polychlorure de vinyle - polyamide 12 en phase statique à 205°C par le composé cyclodiamino dibutylétain formé par interaction des groupements amide et de l'oxyde de dibutylétain. | | | | | |
|---|---|---|---|---|---|
| Exemples | Polychlorure de vinyle (%) | Polyamide (%) | 12 Oxyde de dibutylétain (mole.kg⁻¹) | Taux d'insoluble THF (%) | Taux de gonflement THF (%) |
| 4 | 70 | 30 | 0,240 | 97 | 2,5 |
| 5 | 85 | 15 | 0,240 | 38 | |

## Revendications

1. Procédé de réticulation de (co)polymères chlorés, caractérisé en ce que l'on fait réagir avec ledit (co)polymère, entre 50 et 230°C, et en l'absence de solvant, un dérivé de type amino organométallique de formule (I) :
(R)ₙMe(NR'')ₘ₋ₙR'
dans laquelle :
Me représente un atome d'étain, de plomb, d'antimoine ou de bismuth,
R représente un radical alcoyle linéaire ou ramifié renfermant de 1 à 8 atomes de carbone, un radical cycloalcoyle renfermant de 3 à 12 atomes de carbone, un radical aryle renfermant de 6 à 14 atomes de carbone éventuellement substitué, un radical aralcoyle renfermant de 7 à 14 atomes de carbone éventuellement substitué ou un radical cycloalcoylalcoyle renfermant de 4 à 8 atomes de carbone,
R' représente un radical alcoyle linéaire ou ramifié comportant de 1 à 20 atomes de carbone, un radical aralcoyle renfermant de 7 à 14 atomes de carbone, un radical cycloalcoyle renfermant de 3 à 12 atomes de carbone, un radical cycloalcoylalcoyle renfermant de 4 à 8 atomes de carbone, un radical arylcycloalcoyle renfermant de 10 à 20 atomes de carbone ou une chaîne polymère, ledit radical R' étant lié par au moins deux fonctions amino au métal et éventuellement fonctionnalisé par une fonction éther, thioéther ou hydroxyle
m est égal à 4 et n est égal à 1, 2 ou 3, lorsque Me représente l'étain ou le plomb,
m est égal à 5 et n est égal à 1, 2, 3 ou 4 lorsque Me représente le bismuth ou l'antimoine,
et R'' représente un atome d'hydrogène ou une des significations de R'.

2. Procédé selon la revendication 1, caractérisé en ce que le dérivé amino organométallique est dérivé d'un (co)polymère comportant au moins deux fonctions NH.

3. Procédé selon la revendication 1 ou 2, caractérisé en ce que le (co)polymère chloré est le polychlorure de vinyle.

4. Procédé selon l'une quelconque des revendications 1, 2 ou 3, caractérisé en ce que le (co)polymère comportant des fonctions NH est un polyamide.

5. Procédé selon l'une quelconque des revendications 1, 2 ou 3, caractérisé en ce que le (co)polymère est un polyuréthanne ou une polyurée.

6. Procédé selon l'une quelconque des revendications 1 à 5 , caractérisé en ce que le dérivé amino organométallique est préparé in situ.

7. Procédé selon l'une quelconque des revendications 1 à 6 , caractérisé en ce que le dérivé de type organométallique est un dérivé de l'étain.

8. Compositions réticulables, caractérisées en ce qu'elles renferment un (co)polymère chloré et un dérivé amino organométallique, tel que défini à la revendication 1.

9. Compositions réticulables, caractérisées en ce qu'elles renferment un (co)polymère chloré, un (co)polymère comportant des fonctions NH et un oxyde organométallique, tel que défini à la revendication 1.

10. Compositions réticulables, caractérisées en ce qu'elles comprennent un (co)polymère chloré, un oxyde organométallique et un composé comportant au moins deux fonctions NH.

11. Mélanges, alliages ou compositions mixtes de (co)polymères selon l'une quelconque des revendications 1 à 10.

12. Objets conformés, caractérisés en ce qu'ils sont préparés à partir des produits obtenus par la mise en oeuvre du procédé selon l'une quelconque des revendications 1 à 7.

13. Objets conformés, caractérisés en ce qu'ils sont constitués d'une composition selon l'une quelconque des revendications 8 ou 9.

## Claims

1. Process for cross-linking chlorinated (co)polymers, characterized in that a derivative of organometallic amino-type of formula (I):
(R)ₙMe(NR'')ₘ₋ₙR'
in which:
Me represents a tin, lead, antimony or bismuth atom, preferably tin,
R represents a linear or branched alkyl radical containing 1 to 8 carbon atoms, a cycloalkyl radical containing 3 to 12 carbon atoms, an optionally substituted aryl radical containing 6 to 14 carbon atoms, an optionally substituted aralkyl radical containing 7 to 14 carbon atoms or a cycloalkylalkyl radical containing 4 to 8 carbon atoms.
R' represents a linear or branched alkyl radical containing 1 to 20 carbon atoms, an aralkyl radical containing 7 to 14 carbon atoms, a cycloalkyl radical containing 3 to 12 carbon atoms, a cycloalkylalkyl radical containing 4 to 8 carbon atoms, an arylcycloalkyl radical containing 10 to 20 carbon atoms or a polymer chain, said radical R' being linked by at least two amino functions to the metal and optionally functionalized by an ether, thioether or hydroxyl function,
m is equal to 4 and n is equal to 1, 2 or 3, when Me represents tin or lead,
m is equal to 5 and n is equal to 1, 2, 3 or 4 when Me represents bismuth or antimony,
and R'' represents a hydrogen atom or one of the meanings of R', is reacted with said (co)polymer, between 50 and 230°C, and in the absence of a solvent.

2. Process according to claim 1, characterized in that the organometallic amine derivative is derived from a (co)polymer containing at least two NH functions.

3. Process according to claim 1 or 2, characterized in that the chlorinated (co)polymer is polyvinyl chloride.

4. Process according to any one of claims 1, 2 or 3, characterized in that the (co)polymer containing the NH functions is a polyamide.

5. Process according to any one of claims 1, 2 or 3, characterized in that the (co)polymer is a polyurethane or a polyurea.

6. Process according to any one of claims 1 to 5, characterized in that the organometallic amino derivative is prepared in situ.

7. Process according to any one of claims 1 to 6, characterized in that the organometallic-type derivative is a tin derivative.

8. Cross-linkable compositions, characterized in that they contain a chlorinated (co)polymer and an organometallic amino derivative, as defined in claim 1.

9. Cross-linkable compositions, characterized in that they contain a chlorinated (co)polymer, a (co)polymer containing NH functions and an organometallic oxide, as defined in claim 1.

10. Cross-linkable compositions, characterized in that they contain a chlorinated (co)polymer, an organometallic oxide and a compound containing at least two NH functions.

11. Mixtures, alloys or mixed compositions of (co)polymers according to any one of claims 1 to 10.

12. Shaped objects, characterized in that they are prepared starting from the products obtained by the implementation of the process according to any one of claims 1 to 7.

13. Shaped objects, characterized in that they are composed of a composition according to any one of claims 8 or 9.

## Patentansprüche

1. Verfahren zum Vernetzen von chlorierten (Co)polymeren, dadurch gekennzeichnet, daß man das (Co)polymer bei 50 bis 230°C und in Abwesenheit von Lösungsmittel mit einem Derivat des Amino-Organometall-Typs der Formel (I)
(R)ₙMe(NR'')ₘ₋ₙR'
umsetzt, worin
M ein Zinn-, Blei-, Antimon- oder Bismutatom bedeutet,
R einen linearen oder verzweigten Alkylrest mit 1 bis 8 C-Atomen, einen Cycloalkylrest mit 3 bis 12 C-Atomen, einen gegebenenfalls substituierten Arylrest mit 6 bis 14 C-Atomen, einen gegebenenfalls substituierten Aralkylrest mit 7 bis 14 C-Atomen oder einen Cycloalkylalkylrest mit 4 bis 8 C-Atomen bedeutet,
R' einen linearen oder verzweigten Alkylrest mit 1 bis 20 C-Atomen, einen Aralkylrest mit 7 bis 14 C-Atomen, einen Cycloalkylrest mit 3 bis 12 C-Atomen, einen Cycloalkylalkylrest mit 4 bis 8 C-Atomen, einen Arylcycloalkylrest mit 10 bis 20 C-Atomen oder eine polymere Kette bedeutet, wobei der Rest R' durch mindestens zwei Amino- oder Metallfunktionen gebunden und gegebenenfalls durch eine Ether-, Thioether- oder Hydroxylfunktion funktionalisiert ist,
m = 4 ist und n = 1, 2 oder 3 ist, wenn M Zinn oder Blei bedeutet,
m = 5 ist und n = 1, 2, 3 oder 4 ist, wenn M Wismut oder Antimon bedeutet,
und R'' ein Wasserstoffatom ist oder eine der Bedeutungen von R' hat.

2. Verfahren nach Anspruch 1, dadurch gekennzeichnet, daß das Amino-Organometall-derivat von einem (Co)polymer abgeleitet ist, das mindestens zwei NH-Funktionen trägt.

3. Verfahren nach einem der Ansprüche 1 oder 2, dadurch gekennzeichnet, daß das chlorierte (Co)polymer Polyvinylchlorid ist.

4. Verfahren nach einem der Ansprüche 1, 2 oder 3, dadurch gekennzeichnet, daß das NH-Funktionen tragende (Co)polymer ein Polyamid ist.

5. Verfahren nach einem der Ansprüche 1, 2 oder 3, dadurch gekennzeichnet, daß das (Co)polymer ein Polyurethan oder ein Polyharnstoff ist.

6. Verfahren nach einem der Ansprüche 1 bis 5, dadurch gekennzeichnet, daß das Amino-Organometallderivat in situ hergestellt ist.

7. Verfahren nach einem der Ansprüche 1 bis 6, dadurch gekennzeichnet, daß das Derivat vom Organometall-Typ ein Derivat von Zinn ist.

8. Vernetzbare Zusammensetzungen, dadurch gekennzeichnet, daß sie ein chloriertes (Co)polymer und ein Amino-Organometallderivat, wie es in Anspruch 1 definiert ist, aufweisen.

9. Vernetzbare Zusammensetzungen, dadurch gekennzeichnet, daß sie ein chloriertes (Co)polymer, ein NH-Funktionen aufweisendes (Co)Polymer und ein Organometalloxid, wie es in Anspruch 1 definiert ist, aufweisen.

10. Vernetzbare Zusammensetzungen, dadurch gekennzeichnet, daß sie ein chloriertes (Co)polymer, ein Organometalloxid und eine Verbindung mit mindestens zwei NH-Funktionen umfassen.

11. Mischungen, Legierungen oder gemischte Zusammensetzungen von (Co)polymeren nach einem der Ansprüche 1 bis 10.

12. Geformte Gegenstände, dadurch gekennzeichnet, daß sie aus Produkten hergestellt sind, die mittels Durchführung des Verfahrens nach einem der Ansprüche 1 bis 7 erhalten worden sind.

13. Geformte Gegenstände, dadurch gekennzeichnet, daß sie aus einer Zusammensetzung nach einem der Ansprüche 8 oder 9 bestehen.
